# EUROPEAN PATENT SPECIFICATION

(11) **EP 2 256 004 B1**
(45) Date of publication and mention of the grant of the patent: **26.09.2012**
(21) Application number: 09161016.2
(22) Date of filing: 25.05.2009
(51) Int. Cl.: B60R 21/04, B60R 21/231

(54) **Airbag device**
Airbagvorrichtung
Dispositif d'airbag

(43) Date of publication of application: 01.12.2010
(73) Proprietor: Autoliv Development AB, 447 83 Vårgårda (SE)
(72) Inventor: Hjerpe, Erik, 423 61 Torslanda (SE); Kuntzsch, Stefan, 524 96 Ljung (SE)
(74) Representative: Nilsson, Lars-Magnus

(56) References cited:
- DE-A1- 19 727 598
- DE-A1-102005 003 705
- JP-A- 11 011 242
- JP-A- 2005 145 183

## Description

### Technical field of the invention

The present invention relates to an airbag device for a vehicle, comprising an airbag and a foot support surface, wherein the foot support surface is movable from a first position to a second position under activation of the airbag. Further, the present invention relates to a method for controlling such movement.

### Background

Foot and ankle injuries in frontal car collisions are believed to be caused mainly by occupants contact with the chassis surrounding the floor pan and interaction with the pedals. It is known in the art to use inflatable foot airbags on the floor pan in a vehicle compartment to protect the feet of the occupants in case of an accident. At a frontal vehicle collision the chassis area around the foot bay may be susceptible for depression causing injuries on the feet and lower legs of an occupant. Hence, foot airbags are usually designed to move the feet away from the chassis that might be deformed as a result from a frontal impact. However it is also important that the feet are not bent in a way that might cause fractures on the feet or lower legs of the occupant.

GB 2 383 563 discloses an airbag unit adapted to be positioned on the floor pan in the foot well, beneath the feet of an occupant of a vehicle. The airbag unit has an upper cover located above an airbag. The cover has two sections interconnected by a hinge line. On inflation, the airbag cover is lifted from its initial position to an elevated position. The movement of the cover is restricted by straps placed close to the hinge line to restrict the upward movement of the hinge line. The airbag portions of the cover adjacent the hinge line is elevated to a greater extent during inflation than the portions of the cover which are remote from the hinge line. In this way the heal portion of the foot of the occupant, which is normally located close to the hinge line, will be lifted to a greater extent than the forward part of the foot. This will serve to prevent the foot from being bent in an undesirable manner upon inflation of the foot airbag.

Furthermore, DE 197 27 598 disclose an airbag device for a vehicle, where a foot support for a vehicle occupant is raised to distribute the load on the occupant during a vehicle accident. The support is in the form of a floor covering or a mat having the airbag integrated therein.

However, even though the airbag units in GB 2 383 563 and DE 197 27 598 are improvements with respect to prior techniques in protecting the ankle from being bent backwards, there is still a need for an airbag device which improves the ability to protect the feet and lower leg of vehicle occupants in case of an accident.

### Summary of the invention

It is therefore an object of the present invention to provide an airbag device which is designed to improve the protection of the lower leg and feet of a vehicle occupant at a vehicle collision. These and other objects are met by the appended independent claims 1 and 10. Preferred embodiments of the present invention are presented in the dependent claims.

The inventive concept relates to an airbag device for a vehicle, comprising an airbag and a foot support surface, the foot support surface being arranged to support a foot of a vehicle occupant, the foot support surface being movable from a first position to a second position in the vehicle under activation of the airbag by a pressure source, wherein a tibia angle is defined between a tibia appertaining to the foot and a floor plane of the vehicle, wherein the second position is a retracted position located rearward of the first position with respect to the normal driving direction of the vehicle, and in that the foot support surface is movable from the first position to the second position in order to achieve a larger tibia angle in the second position than in the first position, wherein said airbag, in an undeveloped situation when said airbag device is arranged in the vehicle, is folded along a folding line which divides said airbag into a first portion and a second portion, wherein said first portion is connected to a chassis compartment part of the vehicle in at least one first attachment point and said second portion is connected to a separate foot support surface plate in at least one second attachment point, said foot support plate forming said foot support surface, and wherein said airbag is arranged in the vehicle such that said folding line extends along the lowermost part of said airbag when folded.

The inventive concept also relates to a method for controlling a movement of a foot support surface arranged to support a foot of a vehicle occupant under activation of an airbag by a pressure source, by moving the foot support surface from a first position to a second position in the vehicle, wherein a tibia angle is defined between a tibia appertaining to the foot and a floor plane of the vehicle, wherein the second position is a retracted position located rearward of the first position with respect to the normal driving direction of the vehicle, wherein said movement is undertaken to achieve a larger tibia angle in the second position than in the first position, wherein the method further comprises arranging said airbag such that, in an undeveloped situation when said airbag device is arranged in the vehicle, it is folded along a folding line which divides said airbag into a first portion and a second portion, connecting said first portion to a chassis compartment part of the vehicle in at least one first attachment point and connecting said second portion to a separate foot support surface plate in at least one second attachment point, wherein said foot support plate forming said foot support surface, and arranging said airbag in the vehicle such that said folding line extends along the lowermost part of said airbag when folded.

By floor plane is meant a flat area on the interior floor of the vehicle, in front of the driver's or passenger's seat. In other words, the floor plane of the vehicle essentially corresponds to the horizontal plane when the vehicle is driven on flat ground. Moreover, the foot support surface may be a separate part or may be an integral portion of the airbag.

An insight, forming basis for the present invention, is that it is desirable to minimize the component force along the lower leg or tibia of an occupant, referred to as tibia force, at a vehicle frontal collision in order to reduce foot and lower leg injuries. Moreover, the tibia force of an occupant in a vehicle frontal collision is dependent on the angle between the floor plane of the vehicle and the lower leg or tibia of the occupant, referred to as the tibia angle. In general, an increased tibia angle results in a decreased tibia force. Thus, an improved protection of the lower leg of an occupant at a vehicle frontal collision may be achieved by increasing the tibia angle when the load onto the tibia is at maximum. In other words, the development of the foot airbag should result in that the tibia angle is increased to minimize the force onto the lower leg in the direction along the leg. Studies have shown that if the tibia angle is increased from for instance 30° to 50°, the tibia force at an occupant during a frontal collision may be decreased with 40%. Increasing the tibia angle may be carried out by moving the feet of the occupant rearwards in the vehicle, for instance about 10 centimetres. However, if the feet are moved rearward but the position of the knees of the occupant is lifted, the tibia angle is not necessarily increased. Thus it is desired to obtain a position of the feet, at a vehicle frontal collision, rearward in the vehicle but without lifting the knees, at least not to any great extent. The present invention will do this.

Thus, it is preferred that the foot support surface is moved from the first position to the second position along an arched or curved movement path. Initially, just after the airbag inflation started, the foot support surface is moved in a direction normal to a plane of the foot support surface, with is a direction having an upward component, with respect the floor plane of the vehicle. The foot support surface may be lifted to for instance 1.5 - 3 cm in a vertical direction in the vehicle before starting to move downwards again. The final inflated position, referred to as the second position, may then be located about 7-10 cm rearward of the initial, first position and at essentially the same level.

It may be preferred that the foot support surface is at essentially the same level or lower, with respect to the floor plane, when the foot support surface is in the second position compared to when the foot support surface is in said first position. Generally speaking, the lower the level of the occupant feet at an impact, the larger the tibia angle will become. Thus it is preferred that the level of the foot support surface in the second position is not higher with respect to the vehicle floor plane than in the first position. However, since the inventive idea concerns control of the tibia angle of an occupant in a vehicle, it could anyhow be allowed to have the foot support surface at a slightly higher level in the second position than in the first position, up to about an inch, as long as the tibia angle is not decreased with respect to the tibia angle in the first position.

Further, it may be preferred that the foot support surface is inclined an angle with respect to the floor plane and wherein the angle is larger when the foot support surface is in the first position than in the second position to prevent ankle injuries.

In one embodiment of the present invention the airbag device further comprises a control structure for controlling a movement of the foot support surface from the first position to the second position in order to achieve a larger tibia angle in the second position than in the first position. The control structure may comprise any type of arrangement that restrains the movement of the foot support surface to stay along the specified path. For instance the control structure may constitute the shape of the airbag. An airbag having a shape which is expandable to a larger extent in the lower portions of the airbag than in the upper portions may do this. Other examples of control structures are to utilize folding of the airbag in a certain manner or controlling the airbag development by straps on the outside and/or on the inside of the airbag. The control structure could also comprise an elongated unit such as a band, cloth or strip which is connected to the foot support surface in one end and to the chassis of the vehicle in the other end and which unit at least partly surrounds the airbag. If the unit is placed underneath the airbag and folded towards the foot support surface in the end of the unit which is connected to the foot support surface, the unit may control the movement of the foot support surface during inflation so that the foot support surface attains the requested second position. The control structure may at least partly be located below the airbag and connected to a chassis compartment part of the vehicle in at least one first attachment point and to the foot support surface in at least one second attachment point such that the control structure restrains the upward movement of the foot support surface during inflation of the airbag.

The airbag may be adapted to, during inflation of the airbag, be unfolded around the folding line. This is an example of how a particular folding may serve to control the movement of the foot support surface.

In one embodiment the airbag may comprise a pre-chamber and a main chamber, wherein the pre-chamber is at least partly positioned above the main chamber, with respect to the floor plane. Further the pre-chamber may be adapted to, upon inflation of said airbag, expand less than the main chamber in a direction essentially opposite to the normal driving direction of the vehicle. Since the pre-chamber is positioned at the upper part of the foot support surface, *i.e.* at the toe region of the foot support surface, and the main chamber is positioned at the lower part of the foot support surface, *i.e.* at the heel part of the foot support surface, the heel part of the foot support surface will, upon inflation of the airbag, be retracted more than the toe part. In other words, the ankle of the occupant will be flexed less which may minimize the risk of breaking the ankle during an impact.

The width and height of the airbag device may at least correspond to the size of the feet of a normal occupant but preferably be larger to cope with different feet sizes and feet positions.

### Brief description of the drawings

This and other aspects of the present invention will now be described in more detail, with reference to the appended drawings showing embodiments of the present invention.
Figure 1 a shows a side view of one embodiment of the airbag device according to the present invention as arranged in a vehicle.
Figure 1b shows an approximate graph of the time dependent tibia force at a vehicle impact for different tibia angles.
Figure 2 shows a perspective view of the embodiment of the airbag device shown in Figure 1 a.
Figure 3a-c show side views three different stages of development of the embodiment of the airbag device shown in Figure 1 a.
Figure 4 shows a frontal view a piece of the embodiment of the airbag device shown in Figure 1 a.
Figure 5 shows a frontal view a piece of one embodiment of the present invention.
Figure 6a-b show side views two different stages of development of one embodiment of the airbag device according to the present invention.
Figure 7a-b show side views two different stages of development of one embodiment of the airbag device according to the present invention.

### Detailed description of exemplary embodiments

The invention will now for the purpose of exemplification be described in more detail by means of examples and with reference to the accompanying drawings.

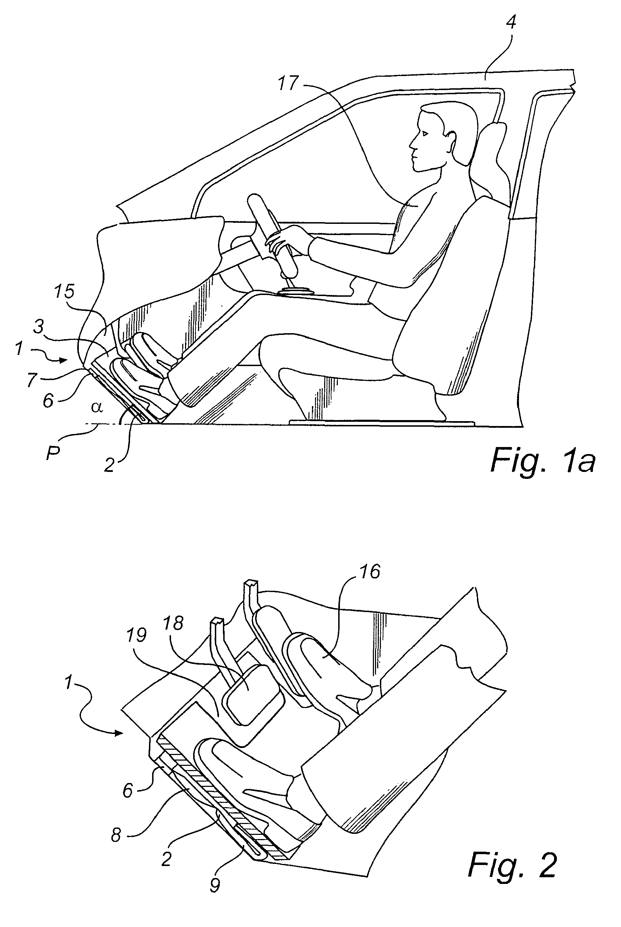

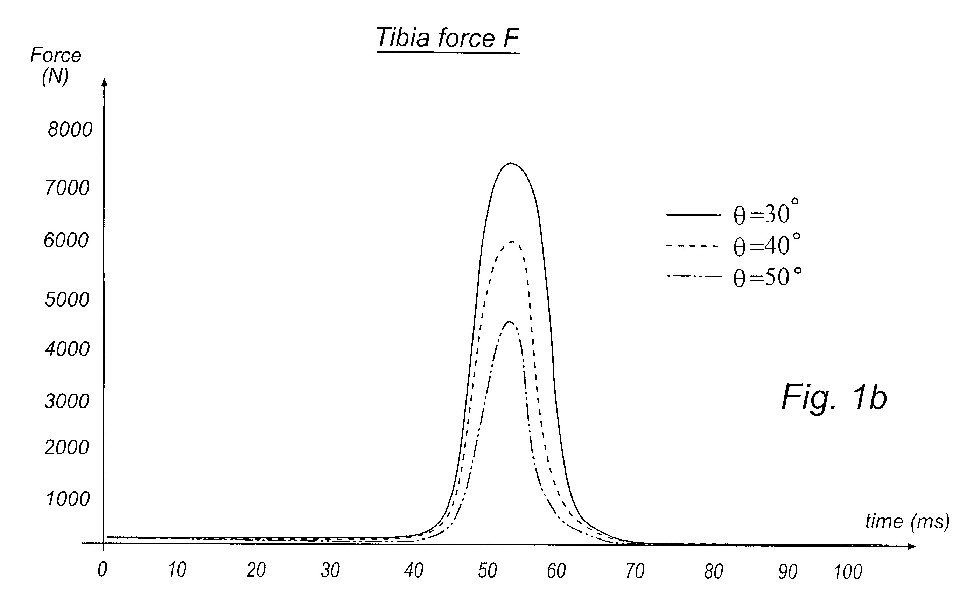

Figure 1 a shows a vehicle 4 equipped with an airbag device 1 according to the invention, arranged in the foot well 15 of the vehicle 4, immediately beneath and in front of the feet 16 of an occupant 17. Even though not illustrated here, the arrangement may be covered by a carpet or similar, or may be formed integrally with a carpet or similar. The airbag device 1 shown in Figure 1 a comprises an inflatable airbag 2 positioned between the floor chassis 7, or splash wall 7, and a foot support surface 3. The foot support surface 3 has the size large enough to at least cover and give support to the entire feet 16 of the occupant 17 in order to support the feet 16 during the inflation of the airbag 2. A pressure source is located in fluid communication with the airbag 2.

During driving of the vehicle 4, the occupant's feet 16 is intended to rest upon the foot support surface 3. The angle between the lower leg or tibia 20 of the occupant 17 and the floor plane P is referred to as tibia angle and is indicated by e. By floor plane P is meant a flat area on the interior floor of the vehicle 4, in front of the driver's or passenger's seat. The floor plane P corresponds to the horizontal plane when the vehicle is driven or parked on flat ground. The tibia angle e is taken from the rear side of the tibia downwards, i.e. the tibia angle e will be between 0 and 90°. As mentioned above, during an impact in a vehicle frontal collision, the force acting along the tibia is dependent on the relation between the tibia and horizontal plane, i.e. the tibia angle e, during an impact. Thus, an important object of the present invention is to not only use the airbag device 1 to move the feet 16 away from the impact zone but also to increase the tibia angle e at an impact, thus decrease the tibia force, i.e. the force component along the tibia, which is indicated by F in Figure 1 a. This is at least partly achieved by allowing the lower leg 20 of the occupant 17 to be moved to a position rearward of the initial position but at essentially the same level or lower, with respect to the horizontal plane or floor plane P. When the foot support surface 3 is retracted to a rearward position in the vehicle 4, rather than just moved in a direction perpendicular to the foot support surface 3 preserving its initial inclination position, the tibia angle e will increase. In the view depicted in Figure 1 a the airbag 2 is in a passive mode, *i*.*e*. not inflated. The foot support surface 3 is inclined an angle α with respect to the floor plane P of the vehicle 4. The angle α between the foot support surface 3 and the floor plane P is taken from the underside of the foot support surface 3, *i*.*e*. the angle α will be between 0 and 90°.

Figure 1b illustrates how the tibia force F, *i*.*e*. the force component along the tibia, for a vehicle occupant in during a vehicle frontal collision varies for three different tibia angles e, 30 °, 40 ° and 50°. Figure 1b is drawn using approximate values which originate from simulations. It can be seen that the impact upon the tibia starts about 40 milliseconds after the initial collision took place and the maximum value of the tibia force F occurs about 55 milliseconds after the initial collision. It can also be seen that the tibia force F is lowered with about 40 %, from about 7.5 kN to about 4.5 kN if the tibia angle e is increased from 30° to 50°, for this particular example. The values in Figure 1b are taken as an example and vary with for instance different vehicles sizes and constructions.

Figure 2 shows the airbag device 1 in Figure 1 a in a perspective view. The foot support surface 3 has cut outs 19 for the pedals 18, which are normally not necessary if the airbag device 1 is used at the passenger side. The invention will mainly be described with respect to the feet of a driver of the vehicle but also the passenger side or the rear seat passenger's site may be equipped with an airbag device 1 according to the invention. In addition, it may be useful with an airbag device 1 according to the present invention at the feet of the rear seat passengers if a pivotable front seat is used, which seat may be used to prevent whiplash injuries. Naturally, the feet of the driver has different positions depending on whether or not the feet are resting on the foot support surface 3 or are placed on a pedal 18. For simplicity reasons the angles and distances herein are described for a foot 16 resting directly on the foot support surface 3.

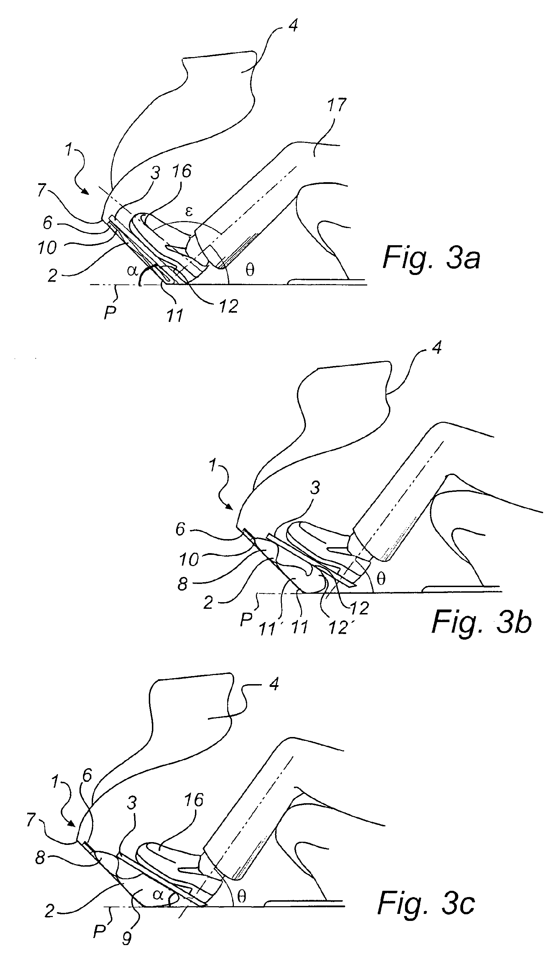

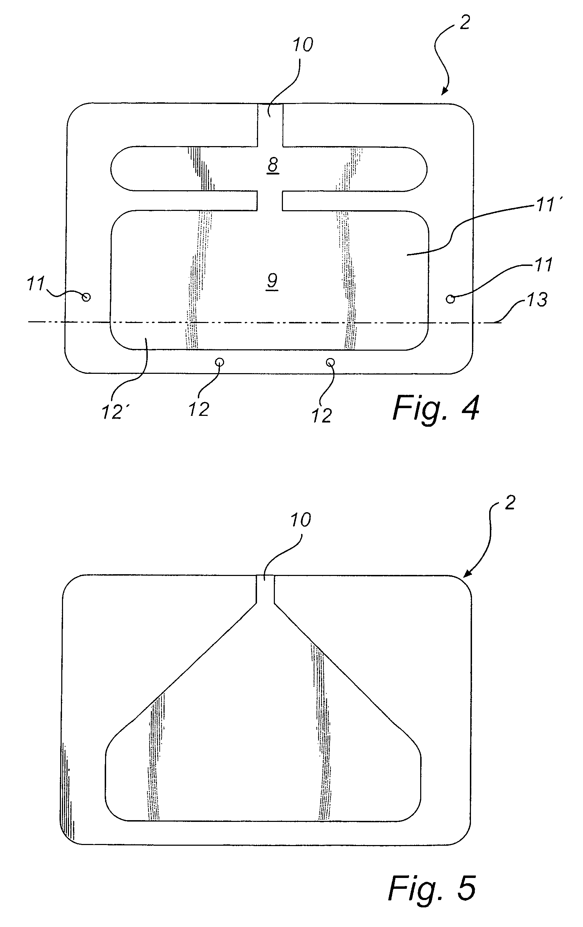

Figures 3a-c illustrate how the tibia angle e changes as the airbag 2 is developed for the same embodiment of the invention as is shown in Figures 1 and 2. In the first position A, shown in Figure 3a, the airbag 2 is in its initial, inactive state, i.e. undeveloped and retained between the foot support surface 3 and the splash wall 7. In Figure 3b the airbag 2 has been partly developed and the foot support surface 3 has been moved to an intermediate position which is located higher than in the first position A with respect the floor plane P of the vehicle 4 and retracted in the vehicle 4 with respect to the first position A. Figure 3c shows the airbag device 1 in a second position B where the airbag 2 has been inflated and the foot support surface 3 has been moved rearward in the vehicle 4 to a retracted position B located at the same or almost the same vertical level as in the initial position A.. In this particular embodiment, the airbag 2 comprises two chambers 8, 9, which will be described in more detail with reference to Figure 4 below. The airbag 2 is activated by a pressure source 6 which is in fluid communication with the airbag 2 via a fluid inlet 10. The pressure source 6 is located above the airbag 2 in vehicle 4 and is fixed to the vehicle chassis 7. The pressure source may be any type of suitable pressure source, for instance a pneumatic tank or a pyrotechnic inflator.

As can be seen in Figures 3a-c, the height level of the foot support surface 3 is essentially the same in the retracted position B, shown in Figure 3c, as in the initial position A, shown in Figure 3a. However, the foot support surface 3 is not necessarily at the same level during the entire movement from the first position A to the second position B, which can be seen in Figure 3b showing an intermediate position where the foot support surface 3 is at a higher level in the vehicle than in the first and second positions A, B. For an airbag 2 as the one described with reference to Figures 1-3, the foot support surface 3 will normally, when the airbag 2 is activated, initially move essentially in a direction parallel to a normal to the foot support surface plane, which is a direction having an upwards component. As the movement continues the foot support surface 3 will follow a curved or arched movement path and start to move downwards about halfway between the first position A and the second position B. When the foot support surface 3 has reached the second position B, which is the final position, the airbag 2 has been completely developed. Having a movement path of the foot support surface 3 which begins with a movement where the feet 16 of the occupant 17 is lifted essentially perpendicular to the sole of the feet 16 may be advantageous since it keeps the feet 16 stable and prevents the feet 16 from sliding of the foot support surface 3. In addition, such a movement quickly removes the feet 16 from the impact zone, i.e. the vehicle chassis 7. For one embodiment of the present invention it may be advantageously to have the inflated position B shown in Figure 3c, located about 7-10 cm rearward in the vehicle compared to the initial position A shown in Figure 3a. It may also be preferred that the foot support surface 3 is lifted upwards about 1.5-3 cm during its movement along a curved or arched movement path and then lowered so than it in the inflated position B is located at about the same level with respect to the floor plane P as in the initial position A. The preferred distances varies for instance with different types and sizes of vehicles.

The airbag 2 is made of fabric, for weight, cost and space reasons, but could be made of any suitable material, for instance polymer or metal. The airbag 2 may be made in a conventional manner by one folding layer of fabric and joining it by for instance sewing, gluing, welding or heat staking. Alternatively, the airbag 2 may be woven in one piece, or two sheet layers could be placed on top of each other and then bounded together in a conventional manner. The material of the foot support surface 3 or load distribution plate 3 may be chosen from a wide range of different materials such as rubber, plastic or metal. For some embodiments, particular of no additional protection for the airbag 2 is used, the foot support surface 3 may be important for protecting the airbag 2 from sharp obstacles, both in the inactive mode and in an inflated mode.

It should be noted that not only the tibia angle e changes as the foot support surface 3 is moved from the first position A to the second position B but also the angle between the lower leg and the upper side of the foot 16 of the occupant 17, indicated by ε, changes. This is a direct result from that the inclination α of the foot support surface 3 with respect to a floor plane P changes as the foot support surface 3 is moved from the first position A to the second position B. The angle between the foot support surface and the floor plane P is denoted α. Since α is larger in the first position A than in the second position B, the angle ε between the lower leg and the upper side of the foot of the occupant is increased as the angle α between the foot support surface 3 and the floor plane P is decreased. In other words, on inflation of the airbag 2 the toe part of the foot is lowered with respect to the heel part of the foot which may minimize the risk of injuries on the foot during or as a result of the inflation.

Figure 4 shows a more detailed view of the same embodiment of the airbag device 1 as is described with reference to Figures 1-3. For the sake of clarity the airbag 2 in Figure 4 is depicted separate from a vehicle, *i*.*e*. not arranged in a vehicle. The airbag 2 comprises two chambers 8, 9 in direct fluid communication with each other. The first chamber 8, called pre-chamber 8, is in fluid communication with the pressure source 6 (see Figures 1-3) via a fluid inlet 10. The second chamber 9, called the main chamber 9, is in fluid communication with the pre-chamber 8. In the inactive first position A, the pre-chamber 8 is located rather above and in front of the main chamber 9, in relation to the vehicle, which can be seen in Figure 3a. Thus, on inflation, fluid is blown via the inlet 10 into the pre-chamber 8 and onwards into the main chamber 9. To ensure that the ankle is not bent backwards in an undesired manner during inflation of the airbag 2, the pre-chamber 8 may be adapted to expand less than the main chamber 9. This could for instance be achieved by having the airbag material of the pre-chamber 8 more pervious to air or having straps inside the airbag to control the inflation and prevent the airbag, or some part of the airbag, from attaining a too rounded shape when inflated. However, this does not necessitate two airbag chambers, but could be obtained having one single airbag chamber. It may also be achieved by modifying the shape of the airbag so that the airbag has only one chamber but is shaped to be smaller in the upper parts than in the lower parts. Such an embodiment is shown in Figure 5. Yet another alternative is to have the airbag folded so that the movement of the airbag during inflation is directed even more downwards and/or backwards in the vehicle.

The following description refers to the airbag 2 shown in Figure 4, as separated from a vehicle, i.e. the airbag 2 lies flat and is not arranged in a vehicle. The airbag 2 in Figure 4 is depicted in cross section. Firstly, the main chamber 9 is arranged to be attached to the splash wall 7 of the vehicle foot well 15 (see Figures 1-3) at two first attachment points 11 located on the sides of the main chamber 9, at the middle portion of the main chamber 9. Secondly, the main chamber 9 is arranged to be attached to the foot support surface 3 at two second attachment points 12 located at the lowermost part of the main chamber 9, or below the main chamber 9. The airbag 2 is further arranged to be folded along a folding line 13 extending essentially transversely over the main chamber 9, below the first attachment points 11 and above the second attachment points 12 when the airbag 2 is unfolded as depicted in Figure 4. Thus the folding line 13 divides the main chamber 9 into a first portion 11' and a second portion 12'.

The airbag 2 shown in Figures 1-4 will now be described with reference to the vehicle, as arranged in the vehicle. The main chamber 9 of the airbag 2 is folded along the folding line 13, shown in Figure 4, and attached to the splash board 7 in the first attachments points 11 and to the foot support surface 3 in the second attachment points 12. Thus, in the inactive position A shown in Figure 3a, the lowest part of airbag 2 becomes the portion at the folding line 13. On inflation of the airbag 2 shown in Figure 4 and shown arranged in a vehicle in Figures 1-3, the portion of the airbag 2 between the folding line 13 and the second attachment points 12 will rotate around the folding line 13 thus the second attachment points 12 approach the floor of the vehicle on inflation. Since the airbag 2 is attached both to the foot support surface 3 and to the splash wall 7 at the attachment points 11, 12, respectively, during the entire inflation of the airbag 2, the described rotation movement of a portion of the main chamber 9 will push the foot support surface 3, and hence the feet 16 of the occupant 17, backwards and prevent at the foot support surface 3 from attaining a deflated position B above the initial position A. Moreover, with this in this geometry, the inclination α of the foot support surface 3 with respect to the floor plane P will decrease as the folded portion of the main chamber 9 is unfolded, which prevents the ankle of the occupant 17 from being bent backwards.

Figure 5 shows another airbag 2 depicted in cross section. The airbag 2 shown in Figure 5 has only one chamber and is shaped in a rather triangular shape where the lower portions have a larger expandable volume than the upper portions. An airbag having such properties may be used for controlling the inclination of the foot support surface 3. Since the lower part of the airbag 2 shown in Figure 5 is designed to expand more in a direction rearward and upwards in the vehicle than the upper portions of the airbag 2, the shape of the airbag 2 may be used as a control structure for controlling the movement of the foot support surface 3. On inflation, the airbag 2 will allow the foot support surface 3 to be retracted more in the heel region than in the toe region which may lead to a safer position for the ankle of the occupant at an impact as well as decreasing the angle between the foot support surface 3 and the floor plane of the vehicle α.

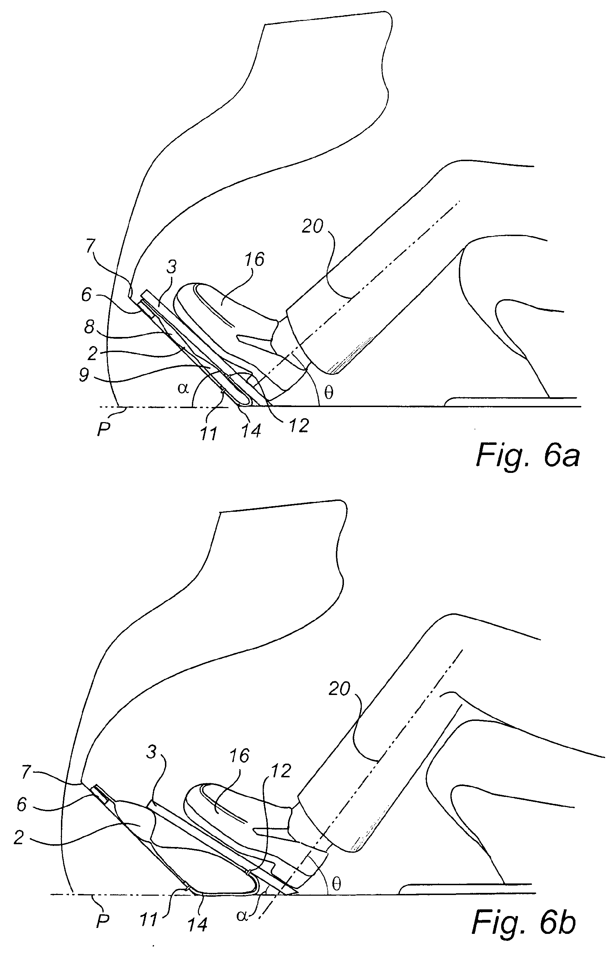

Figures 6a-b show another embodiment of the present invention. The arrangement is the same as the one described with reference to Figures 1-4 except that the airbag 2 is different. The airbag 2 shown in Figures 6a-b also comprise two chambers 8, 9 but it is attached to the foot support surface 3 and the splash wall 7 using a cloth 14 or a band 14 which is inserted underneath the airbag 2. One end of the band 14 is attached to the foot support surface 3 and the other end is attached to the splash wall 7. On inflation, the airbag 2 pushes the band 14 downward, towards the vehicle floor, and thus the foot support surface 3 as well as the occupant feet 16 are pushed downwards so that a second position B of the foot support surface 3 is obtained at the same level or lower than the initial position A, with respect to the floor plane P. The airbag 2 is, as in the previous embodiment, still attached to the pressure source 6 which, in turn, is attached to the chassis 7. An airbag arrangement as the one in Figures 5a-b will basically follow the same movement path as the airbag arrangement described with reference to Figures 1-4, but since the cloth 14 or band 14 is used the airbag 2 does not have to be folded to control its movement path.

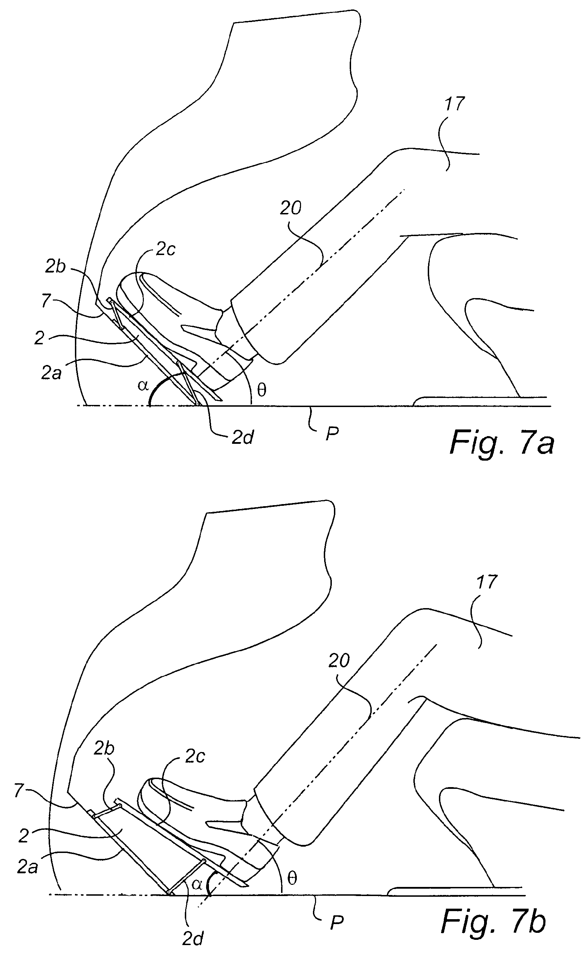

In Figures 7a-b yet another embodiment of the invention is shown. The outer shape of the airbag 2, in cross section, is a tetragon having four sides 2a, 2b, 2c, 2d. One of the sides 2a is attached to the splash wall 7 and has essentially the same inclination as the splash wall 7. The side 2c opposite of the side 2a attached to the splash wall 7 serves as a foot support surface 3. The side 2a which is attached to the splash wall 7 and the foot support surface side 2c are connected to each other by two intermediate sides 2b, 2d. In the initial position A shown in Figure 7a, the tetragon is compressed to a rather flat structure and the foot support surface side 2c is essentially parallel to the splash wall side 2a. The intermediate side 2b connects the side 2a, which is attached to the splash wall 7, and the foot support surface side 2c, at the upper end of those sides 2a, 2c and the other intermediate side 2d connects the sides 2a, 2c at the lower end of the side 2a, which is attached to the splash wall 7, and is attached to a middle portion of the foot support surface side 2c. In order to achieve an inflated position B, shown in Figure 7b, where the tibia angle e between the tibia of the occupant and the floor plane P of the vehicle is larger than in the first position A, shown in Figure 7a, the lower of the two intermediate sides 2d is about 50 % longer than the upper inter intermediate side 2b. On inflation of the airbag 2 shown in Figures 7a-b, the intermediate sides 2b, 2d rotate around their attachments to the splash wall side 2a. The rotation will force the foot support surface side 2c away from the splash board 7 and into an inflated position B. In the same manner as described with reference to the previous embodiments the movement of the foot support surface side 2c is carried out along an arched movement path and the tibia angle e is increased in the inflated position shown in Figure 7b with respect to the initial position shown in Figure 7a. The length of the intermediate sides 2b, 2d may be varied to achieve an optimal tibia angle e when the airbag 2 has been developed. It should be noted than in the embodiment shown in Figure 7 the foot 16 of the occupant is rested directly onto one surface 2c of the airbag 2 and no separate foot support surface is necessary. However, for better protection of the foot and/or for better stability of the foot it may be advantageously to use a separate foot support surface also for this embodiment.

The person skilled in the art realizes that the present invention by no means is limited to the embodiments described above. On the contrary, many modifications and variations are possible within the scope of the appended claims. Further, the specific dimensions and angles should be optimized for the particular vehicle used.

## Claims

1. Airbag device (1) for a vehicle (4), comprising an airbag (2) and a foot support surface (3), said foot support surface (3) being arranged to support a foot (16) of a vehicle occupant (17), said foot support surface (3) being movable from a first position (A) to a second position (B) in said vehicle (4) under activation of said airbag (2) by a pressure source (6), wherein a tibia angle (θ) is defined between a tibia (20) appertaining to said foot (16) and a floor plane (P) of the vehicle (4), wherein said second position (B) is a retracted position located rearward of said first position (A) with respect to the normal driving direction of the vehicle (4), and in that said foot support surface (3) is movable from said first position (A) to said second position (B) in order to achieve a larger tibia angle (θ) in said second position (B) than in said first position (A), **characterized in that** said airbag (2), in an undeveloped situation when said airbag device (1) is arranged in the vehicle (4), is folded along a folding line (13) which divides said airbag (2) into a first portion (11') and a second portion (12'), wherein said first portion (11') is connected to a chassis compartment part (7) of the vehicle (4) in at least one first attachment point (11) and said second portion (12') is connected to a separate foot support surface plate (3) in at least one second attachment point (12), said foot support plate (3) forming said foot support surface (3), and wherein said airbag (2) is arranged in the vehicle (4) such that said folding line (13) extends along the lowermost part of said airbag (2) when folded.

2. Airbag device (1) according to claim 1, wherein said foot support surface (3) is moved from said first position (A) to said second position (B) along an arched movement path.

3. Airbag device (1) according to anyone of the preceding claims,
wherein said foot support surface (3) is at essentially the same level or lower, with respect to said floor plane (P), when said foot support surface (3) is in said second position (B) compared to when said foot support surface (3) is in said first position (A).

4. Airbag device (1) according to anyone of the preceding claims,
wherein said foot support surface (3) is inclined an angle (α) with respect to said floor plane (P) and wherein said angle (α) is larger when said foot support surface (3) is in said first position (A) than in said second position (B).

5. Airbag device (1) according to anyone of the preceding claims, further comprising a control structure (5) for controlling a movement of said foot support surface (3) from said first position (A) to said second position (B) in order to achieve a larger tibia angle (θ) in said second position (B) than in said first position (A).

6. Airbag device (1) according to claim 5, wherein said control structure (5) is at least partly located below said airbag (2) and is connected to a chassis compartment part (7) of the vehicle (4) in at least one first attachment point (11) and to said foot support surface (3) in at least one second attachment point (12) such that said control structure (5) restrains the upward movement of said foot support surface (3) during inflation of said airbag (2).

7. Airbag device (1) according to anyone of the preceding claims,
wherein said airbag (2) is adapted to, during inflation of said airbag (2), be unfolded around said folding line (13).

8. Airbag device (1) according to anyone of the preceding claims, wherein said airbag (2) comprises a pre-chamber (8) and a main chamber (9), wherein said pre-chamber (8) is at least partly positioned above said main chamber (9), with respect to said floor plane (P).

9. Airbag device (1) according to claim 8, wherein said pre-chamber (8) is adapted to, upon inflation of said airbag (2), expand less than said main chamber (9) in a direction essentially opposite to said normal driving direction of the vehicle (4).

10. Method for controlling a movement of a foot support surface (3) arranged to support a foot (16) of a vehicle occupant (17) under activation of an airbag (2) by a pressure source (6), by moving said foot support surface (3) from a first position (A) to a second position (B) in said vehicle (4), wherein a tibia angle (θ) is defined between a tibia (20) appertaining to said foot (16) and a floor plane (P) of the vehicle (4), wherein said second position (B) is a retracted position located rearward of said first position (A) with respect to the normal driving direction of the vehicle (4), wherein said movement is undertaken to achieve a larger tibia angle (θ) in said second position (B) than in said first position (A), **characterized in that** the Method further comprises arranging said airbag (2) such that, in an undeveloped situation when said airbag device (1) is arranged in the vehicle (4), it is folded along a folding line (13) which divides said airbag (2) into a first portion (11') and a second portion (12'), connecting said first portion (11') to a chassis compartment part (7) of the vehicle in at least one first attachment point (11) and connecting said second portion (12') to a separate foot support surface plate (3) in at least one second attachment point (12), wherein said foot support plate (3) forming said foot support surface (3), and arranging said airbag (2) in the vehicle (4) such that said folding line (13) extends along the lowermost part of said airbag (2) when folded.

11. Method according to claim 10, wherein said movement of said foot support surface (3) from said first position (A) to said second position (B) is undertaken along an arched movement path.

12. Method according to claim 10 or 11, wherein said foot support surface (3) assumes the same level or lower, with respect to said floor plane (P), when said foot support surface (3) has reached said second position (B) compared to when said foot support surface (3) is in said first position (A).

13. Method according to anyone of claims 10-12, wherein said foot support surface (3) is inclined an angle (α) with respect to said floor plane (P) and wherein said angle (α) is larger when said foot support surface (3) is in said first position (A) than in said second position (B).

## Patentansprüche

1. Airbagvorrichtung (1) für ein Kraftfahrzeug (4), welche einen Airbag (2) und eine Fußstützfläche (3) umfasst, wobei die Fußstützfläche (3) dafür eingerichtet ist, einen Fuß (16) eines Fahrzeuginsassen (17) zu stützen, wobei die Fußstützfläche (3) bei einer Aktivierung des Airbags (2) durch eine Druckquelle (6) aus einer ersten Position (A) in eine zweite Position (B) in dem Fahrzeug (4) bewegbar ist, wobei ein Schienbeinwinkel (θ) zwischen einem Schienbein (20), das zu dem Fuß (16) gehört, und einer Bodenebene (P) des Fahrzeugs (4) definiert ist, wobei die zweite Position (B) eine zurückgezogene Position ist, die sich, auf die normale Fahrtrichtung des Fahrzeugs (4) bezogen, hinter der ersten Position (A) befindet, wobei die Fußstützfläche (3) aus der ersten Position (A) in die zweite Position (B) bewegbar ist, um in der zweiten Position (B) einen größeren Schienbeinwinkel (θ) zu erzielen als in der ersten Position (A), **dadurch gekennzeichnet, dass** der Airbag (2) in einer nicht entfalteten Situation, wenn die Airbagvorrichtung (1) in dem Fahrzeug (4) angeordnet ist, entlang einer Faltlinie (13) gefaltet ist, welche den Airbag (2) in einen ersten Abschnitt (11') und einen zweiten Abschnitt (12') unterteilt, wobei der erste Abschnitt (11') mit einem Fahrgestellteil (7) des Fahrzeugs (4) in mindestens einem ersten Befestigungspunkt (11) verbunden ist und der zweite Abschnitt (12') mit einer separaten Fußstützplatte (3) in mindestens einem zweiten Befestigungspunkt (12) verbunden ist, wobei die Fußstützplatte (3) die Fußstützfläche (3) bildet, und wobei der Airbag (2) in dem Fahrzeug (4) derart angeordnet ist, dass sich die Faltlinie (13) entlang des untersten Teils des Airbags (2) erstreckt, wenn dieser zusammengefaltet ist.

2. Airbagvorrichtung (1) nach Anspruch 1, wobei die Fußstützfläche (3) aus der ersten Position (A) in die zweite Position (B) entlang eines bogenförmigen Bewegungsweges bewegt wird.

3. Airbagvorrichtung (1) nach einem der vorhergehenden Ansprüche, wobei die Fußstützfläche (3) bezüglich der Bodenebene (P), wenn sich die Fußstützfläche (3) in der zweiten Position (B) befindet, im Wesentlichen auf derselben Höhe oder niedriger angeordnet ist als dann, wenn sich die Fußstützfläche (3) in der ersten Position (A) befindet.

4. Airbagvorrichtung (1) nach einem der vorhergehenden Ansprüche, wobei die Fußstützfläche (3) bezüglich der Bodenebene (P) um einen Winkel (α) geneigt ist und wobei der Winkel (α), wenn sich die Fußstützfläche (3) in der ersten Position (A) befindet, größer ist als in der zweiten Position (B).

5. Airbagvorrichtung (1) nach einem der vorhergehenden Ansprüche, welche ferner eine Steuerungsstruktur (5) zum Steuern einer Bewegung der Fußstützfläche (3) aus der ersten Position (A) in die zweite Position (B) umfasst, um in der zweiten Position (B) einen größeren Schienbeinwinkel (θ) zu erzielen als in der ersten Position (A).

6. Airbagvorrichtung (1) nach Anspruch 5, wobei die Steuerungsstruktur (5) wenigstens teilweise unter dem Airbag (2) angeordnet ist und mit einem Fahrgestellteil (7) des Fahrzeugs (4) in mindestens einem ersten Befestigungspunkt (11) verbunden ist und mit der Fußstützfläche (3) in mindestens einem zweiten Befestigungspunkt (12) verbunden ist, derart, dass die Steuerungsstruktur (5) während des Aufblasens des Airbags (2) die Bewegung der Fußstützfläche (3) nach oben begrenzt.

7. Airbagvorrichtung (1) nach einem der vorhergehenden Ansprüche, wobei der Airbag (2) dazu eingerichtet ist, während des Aufblasens des Airbags (2) entlang der Faltlinie (13) entfaltet zu werden.

8. Airbagvorrichtung (1) nach einem der vorhergehenden Ansprüche, wobei der Airbag (2) eine Vorkammer (8) und eine Hauptkammer (9) umfasst, wobei die Vorkammer (8) bezüglich der Bodenebene (P) wenigstens teilweise über der Hauptkammer (9) positioniert ist.

9. Airbagvorrichtung (1) nach Anspruch 8, wobei die Vorkammer (8) dazu eingerichtet ist, sich beim Aufblasen des Airbags (2) in einer Richtung, die zu der normalen Fahrtrichtung des Fahrzeugs (4) im Wesentlichen entgegengesetzt ist, weniger auszudehnen als die Hauptkammer (9).

10. Verfahren zur Steuerung einer Bewegung einer Fußstützfläche (3), die dafür eingerichtet ist, einen Fuß (16) eines Fahrzeuginsassen (17) zu stützen, bei einer Aktivierung des Airbags (2) durch eine Druckquelle (6), indem die Fußstützfläche (3) aus einer ersten Position (A) in eine zweite Position (B) in dem Fahrzeug (4) bewegt wird, wobei ein Schienbeinwinkel (θ) zwischen einem Schienbein (20), das zu dem Fuß (16) gehört, und einer Bodenebene (P) des Fahrzeugs (4) definiert ist, wobei die zweite Position (B) eine zurückgezogene Position ist, die sich, auf die normale Fahrtrichtung des Fahrzeugs (4) bezogen, hinter der ersten Position (A) befindet, wobei die Bewegung ausgeführt wird, um in der zweiten Position (B) einen größeren Schienbeinwinkel (θ) zu erzielen als in der ersten Position (A), **dadurch gekennzeichnet, dass** das Verfahren ferner umfasst: Anordnen des Airbags (2) derart, dass er in einer nicht entfalteten Situation, wenn die Airbagvorrichtung (1) in dem Fahrzeug (4) angeordnet ist, entlang einer Faltlinie (13) gefaltet ist, welche den Airbag (2) in einen ersten Abschnitt (11') und einen zweiten Abschnitt (12') unterteilt; Verbinden des ersten Abschnitts (11') mit einem Fahrgestellteil (7) des Fahrzeugs in mindestens einem ersten Befestigungspunkt (11) und Verbinden des zweiten Abschnitts (12') mit einer separaten Fußstützplatte (3) in mindestens einem zweiten Befestigungspunkt (12), wobei die Fußstützplatte (3) die Fußstützfläche (3) bildet; und Anordnen des Airbags (2) in dem Fahrzeug (4) derart, dass sich die Faltlinie (13) entlang des untersten Teils des Airbags (2) erstreckt, wenn dieser zusammengefaltet ist.

11. Verfahren nach Anspruch 10, wobei die Bewegung der Fußstützfläche (3) aus der ersten Position (A) in die zweite Position (B) entlang eines bogenförmigen Bewegungsweges ausgeführt wird.

12. Verfahren nach Anspruch 10 oder 11, wobei die Fußstützfläche (3) bezüglich der Bodenebene (P), wenn die Fußstützfläche (3) die zweite Position (B) erreicht hat, dieselbe oder eine niedrigere Höhe einnimmt als dann, wenn sich die Fußstützfläche (3) in der ersten Position (A) befindet.

13. Verfahren nach einem der Ansprüche 10-12, wobei die Fußstützfläche (3) bezüglich der Bodenebene (P) um einen Winkel (α) geneigt ist und wobei der Winkel (α), wenn sich die Fußstützfläche (3) in der ersten Position (A) befindet, größer ist als in der zweiten Position (B).

## Revendications

1. Dispositif d'airbag (1) pour un véhicule (4), comprenant un airbag (2) et une surface de soutien du pied (3), ladite surface de soutien du pied (3) étant agencée afin de soutenir un pied (16) d'un occupant du véhicule (17), ladite surface de soutien du pied (3) étant déplaçable d'une première position (A) à une seconde position (B) dans ledit véhicule (4) sous l'activation dudit airbag (2) par une source de pression (6), dans lequel un angle de tibia (θ) est défini entre un tibia (20) rattaché audit pied (16) et un plan de sol (P) du véhicule (4), dans lequel ladite seconde position (B) est une position rétractée située en arrière de ladite première position (A) par rapport à la direction de conduite normale du véhicule (4), et en ce que ladite surface de soutien du pied (3) est déplaçable de ladite première position (A) à ladite seconde position (B) afin d'obtenir un plus grand angle de tibia (θ) dans ladite seconde position (B) que dans ladite première position (A), **caractérisé en ce que** ledit airbag (2) dans une situation non développée quand ledit dispositif d'airbag (1) est agencé dans le véhicule (4), est plié le long d'une ligne de pliage (13) qui divise ledit airbag (2) en une première portion (11') et une seconde portion (12'), dans lequel ladite première portion (11')est raccordée à une partie de compartiment de châssis (7) du véhicule (4) dans au moins un premier point de fixation (11) et ladite seconde portion (12') est raccordée à une plaque de surface de soutien du pied séparée (3) dans au moins un second point de fixation (12), ladite plaque de soutien du pied (3) formant ladite surface de soutien du pied (3), et dans lequel ledit airbag (2) est agencé dans le véhicule (4) de telle sorte que ladite ligne de pliage (13) s'étende le long de la partie la plus inférieure dudit airbag (2) quand il est plié.

2. Dispositif d'airbag (1) selon la revendication 1, dans lequel ladite surface de soutien du pied (3) est déplacée de ladite première position (A) à ladite seconde position (B) le long d'un trajet de mouvement arqué.

3. Dispositif d'airbag (1) selon une quelconque des revendications précédentes, dans lequel ladite surface de soutien du pied (3) est essentiellement au même niveau ou inférieur, par rapport audit plan du sol (P), quand ladite surface de soutien du pied (3) est dans ladite seconde position (B) comparé à la situation où ladite surface de soutien du pied (3) est dans ladite première position (A).

4. Dispositif d'airbag (1) selon une quelconque des revendications précédentes, dans lequel ladite surface de soutien du pied (3) est incliné d'un angle (α) par rapport audit plan du sol (P) et dans lequel ledit angle (α) est plus grand quand ladite surface de soutien du pied (3) est dans ladite première position (A) que dans ladite seconde position (B).

5. Dispositif d'airbag (1) selon une quelconque des revendications précédentes, comprenant en outre une structure de commande (5) pour commander un mouvement de ladite surface de soutien du pied (3) de ladite première position (A) à ladite seconde position (B) afin d'obtenir un plus grand angle de tibia (θ) dans ladite seconde position (B) que dans ladite première position (A).

6. Dispositif d'airbag (1) selon la revendication 5, dans lequel ladite structure de commande (5) est au moins partiellement située au-dessous dudit airbag (2) et est raccordée à une partie de compartiment de châssis (7) du véhicule (4) dans au moins un premier point de fixation (11) et à ladite surface de soutien du pied (3) dans au moins un second point de fixation (12) de telle sorte que ladite structure de commande (5) contienne le mouvement vers le haut de ladite surface de soutien du pied (3) pendant le gonflage dudit airbag (2).

7. Dispositif d'airbag (1) selon une quelconque des revendications précédentes, dans lequel ledit airbag (2) est adapté afin, pendant le gonflage dudit airbag (2), d'être déplié autour de ladite ligne de pliage (13).

8. Dispositif d'airbag (1) selon une quelconque des revendications précédentes, dans lequel ledit airbag (2) comprend une pré-chambre (8) et une chambre principale (9), dans lequel ladite pré-chambre (8) est au moins partiellement positionnée au-dessus de ladite chambre principale (9) par rapport audit plan du sol (P).

9. Dispositif d'airbag (1) selon la revendication 8, dans lequel ladite pré-chambre (8) est adaptée afin, lors du gonflage dudit airbag (2), de s'étendre moins que ladite chambre principale (9) dans une direction essentiellement opposée à ladite direction de conduite normale du véhicule (4).

10. Procédé de commande d'un mouvement d'une surface de soutien du pied (3) agencée afin de soutenir un pied (16) d'un occupant de véhicule (17) sous l'activation d'un airbag (2) par une source de pression (6), en déplaçant ladite surface de soutien du pied (3) d'une première position (A) à une seconde position (B) dans ledit véhicule (4), dans lequel un angle de tibia (θ) est défini entre un tibia (20) rattaché audit pied (16) et un plan du sol (P) du véhicule (4), dans lequel ladite seconde position (B) est une position rétractée située en arrière de ladite première position (A) par rapport à la direction de conduite normale du véhicule (4), dans lequel ledit mouvement est entrepris afin d'obtenir un plus grand angle de tibia (θ) dans ladite seconde position (B) que dans ladite première position (A), **caractérisé en ce que** le procédé comprend en outre d'agencer ledit airbag (2) de telle sorte que, dans une situation non développée quand ledit dispositif d'airbag (1) est agencé dans le véhicule (4), il est plié le long d'une ligne de pliage (13) qui divise ledit airbag (2) en une première portion (11') et une seconde portion (12'), raccordant ladite première portion (11') à une partie de compartiment de châssis (7) du véhicule dans au moins un premier point de fixation (11) et raccordant ladite seconde portion (12') à une plaque de surface de soutien du pied séparée (3) dans au moins un second point de fixation (12), dans lequel ladite plaque de soutien du pied (3) forme ladite surface de soutien du pied (3) et agence ledit airbag (2) dans le véhicule (4) de telle sorte que ladite ligne de pliage (13) s'étende le long de la partie la plus inférieur dudit airbag (2) quand il est plié.

11. Procédé selon la revendication 10, dans lequel ledit mouvement de ladite surface de soutien du pied (3) de ladite première position (A) à ladite seconde position (B) est entreprise le long d'un trajet de mouvement arqué.

12. Procédé selon les revendications 10 ou 11, dans lequel ladite surface de soutien du pied (3) adopte le même niveau ou inférieur, par rapport audit plan du sol (P), quand ladite surface de soutien du pied (3) a atteint ladite seconde position (B) comparé à la situation où ladite surface de soutien du pied (3) est dans ladite première position (A).

13. Procédé selon une quelconque des revendications 10 à 12, dans lequel ladite surface de soutien du pied (3) est inclinée d'un angle (α) par rapport audit plan du sol (P) et dans lequel ledit angle (α) est plus grand quand ladite surface de soutien du pied (3) est dans ladite première position (A) que dans ladite seconde position (B).
